# EUROPÄISCHE PATENTSCHRIFT

(11) **EP 0 686 437 B1**
(45) Veröffentlichungstag und Bekanntmachung des Hinweises auf die Patenterteilung: **26.09.2001**
(21) Anmeldenummer: 95108104.1
(22) Anmeldetag: 27.05.1995
(51) Int. Cl.: B07C 3/02, B60P 3/00, B60P 3/42, B65G 1/137

(54) **Verfahren und Vorrichtungen zum Verteilen von Waren**
Process for the distribution of merchandise and the devices for it
Procédé pour la distribution des marchandises et dispositifs pour cela

(30) Priorität: 06.06.1994 DE 4419602
(43) Veröffentlichungstag der Anmeldung: 13.12.1995
(73) Patentinhaber: Raschke, Hans-Dieter, Dr.-Ing., D-30966 Hemmingen (DE)
(72) Erfinder: Raschke, Hans-Dieter, Dr.-Ing., D-30966 Hemmingen (DE)

(56) Entgegenhaltungen:
- EP-A- 0 061 127
- DE-C- 4 412 097
- FR-A- 2 716 176
- GB-A- 2 177 375
- US-A- 5 244 339

## Beschreibung

Die Erfindung betrifft ein Verfahren zum Verteilen von Waren, vorzugsweise von Lebensmitteln, die angeboten werden und die fernmündlich, fernschriftlich oder auf andere Weise in Kommissionierzentren bestellt werden, dadurch gekennzeichnet daß
die Waren von den Erzeugern bzw. Herstellern vorzugsweise in Tanks, Großgebinden, Großlaiben etc., bzw. in Verbrauchsmengen abgepackt, im Wesentlichen jedoch nicht in für die Selbstbedienung hergestellten Fertigpackungen in besagten Kommissionierzentren angeliefert werden, daß besagte Zentren von den Waren bestellungsgemäße Mengen oder Gewichte abteilen, daß die bestellungsgemäß abgeteilten Waren je Auftraggeber unverpackt oder verpackt in Umlaufbehältern (7) zusammengefaßt werden, wobei im Fall des Verpackens in besagten Zentren einheitliche, wiederverwendbare Packstoffe zum Einsatz kommen, daß besagte Umlaufbehälter tourenbezogen in Wechselgestelle (6) eingebracht und die Wechselgestelle ihrerseits dem Lieferbezirk entsprechend in Lieferfahrzeugen untergebracht werden, worin besagte Umlaufbehälter dem Auftraggeber zugestellt werden, wobei besagte Behälter an einem vom Auftraggeber bestimmten Ort in Depotcontainer eingebracht und nach Entleerung von dort wieder zurückgeholt werden und daß die gesamte Auftragsabwicklung in Abwesenheit des Auftraggebers erfolgt und daß die gelieferte Ware auch nicht durch eine bei Lieferung anwesende Person entgegen genommen werden muß.

Lebensmittel und auch andere Waren bezieht der Verbraucher hauptsächlich **in Fertigpackungen**, die im **stationären Lebensmitteleinzelhandel** vorrätig gehalten werden. Gerade im stationären Einzelhandel beschränkt sich der Verkauf unverpackter Lebensmittel auf wenige Sortimente. Die Ursachen dafür liegen in der im Flächenhandel hauptsächlich anzutreffenden Selbstbedienung, der für den offenen Verkauf nicht geeigneten Logistikkette, die das Handling unverpackter Waren vom Hersteller bis zum Verbraucher aus hygienischen Gründen auf ein Minimum und zumeist auf den Fachhandel einschränkt, sowie in hohen Bedienungskosten.

Eine Vielzahl von Verbrauchern nutzt auch die Möglichkeit, unverpackt gehandelte Lebensmittel und Waren für den täglichen Gebrauch **auf Märkten** einzukaufen. Dies können sowohl ambulante Märkte (sog. Wochenmärkte) als auch ortsfeste Märkte (Markthallen) sein.

Überdies hat er mancherorts ein zusätzliches Angebot durch **Fahrverkäufe,** die aus Fahrzeugen heraus erfolgen (z.B. Verkaufsfahrzeuge des örtlich ansässigen Lebensmittelhandwerks, "Rollende Kaufhäuser" usw.).

Schließlich kann er sich Waren auch ins Haus liefern lassen, was sich bei Lebensmitteln allerdings auf ein schmales Sortiment beschränkt (z.B. **Menue- und Pizza-Bringedienste** sowie Gefrierkost, Produkte des Trockensortiments und Getränke).

Für die Sortimentsbeschränkung gibt es mehrere Gründe:

Bei der Inhouse-Belieferung von Lebensmitteln sind wie beim stationären Verkauf u.a. die Bestimmungen des Lebensmittelgesetzes (LMG) sowie die des Lebensmittelbedarfsgegenständegesetzes (LMBG) sowie weitere Vorschriften einzuhalten. Die Kontamination der Waren mit Keimen oder mit Fremdstoffen muß ebenso sicher vermieden werden wie der Verderb, welcher sich z.B. temperaturbedingt rasch einstellen kann.

Die **Heimanlieferung** von Lebensmitteln durch Boten, Post und Paketdienste führt gerade deshalb zu gravierenden Problemen, weil die Waren bei unbeaufsichtigtem Abstellen und Zurücklassen vor der Wohnung eines nicht anwesenden Empfängers außer den Gefahren des Verlustes besonders den Gefahren der Verunreinigung und bei Temperaturempfindlichkeit dem Verderb ausgeliefert sind oder in sehr kurzer Zeit bei Wärmeeinwirkung unbrauchbar werden (z.B. Fisch, Schokolade, Speiseeis). Für frische Lebensmittel ist bei "An die Tür Lieferung" die persönliche Entgegennahme der Ware deshalb unabdingbare Voraussetzung. Kein Lieferant von solchen Lebensmitteln wird diese einfach vor der Tür ablegen, wie dies bei sonstigen Postsendungen und der Lieferung anderer Waren vorkommt.

Über den **Versandhandel** kann ein breites Spektrum an Lebensmitteln auch deshalb nicht bezogen werden, weil es auch hier an logistischen Einrichtungen mangelt, die dieses im gesetzlich zulässigen Rahmen ermöglichen, insbesondere, wenn die Auslieferung darüberhinaus verpackungsarm erfolgen soll.

Die Distributionslogistik für Lebensmittel, die sich seit Ende des 19.Jahrhunderts herausgebildet hat, ist auf den Handel mit Fertigpackungen eingerichtet worden und ist heute im Rahmen der Selbstbedienung darauf angewiesen. Dafür wird etwa die Hälfte der jährlich allein in der Bundesrepublik hergestellten 15 Mio t Packmittel (Wert: ca. 48 Mrd. DM) verwendet. Probleme bereitet insbesondere die Entsorgung dieser Stoffe nach Gebrauch.

Die komplizierte Verteilungslogistik, besonders die für Lebensmittel, führt aber auch durch die daran geknüpften Verkehre zu hohen Belastungen der Umwelt. Nach dem logistischen Aufwand bis zur Einlieferung der Fertigpackungen in den Handel übernimmt bekannterweise der Verbraucher auf sehr ineffiziente Weise einen erheblichen Teil der Feinverteilung durch seine Einkaufsfahrten. Eine Lieferlogistik, die die Transporte nach Art eines Bussystems bündelt, könnte diesem Mangel begegnen.

In der Literatur werden das Sammeln oder Verteilen von Stückgut vereinfachende Verfahren beschrieben:

Mit der in der **EP-A-0061127** beschriebenen Vorrichtung zum Versand von unter sich gleichen Kommissionsbehältern soll mittels eines datenerfassenden Beladens von Tourenbehältern mit den auszuliefernden Kommissionsbehältern und einer begleitenden Dokumentation die Belieferung von Apotheken durch den Großhandel vereinfacht werden.

Der Tourenbehälter, für den in der **EP-A-0061127** Schutz begehrt wird, wird als durch ein Gehäuse umschlossenes Regal beschrieben, welches durch eine erste Türe auf der Schmalseite beladen und durch eine zweite Türe oder durch Klappen auf der Längsseite entladen wird. Beladene Tourenbehälter werden danach gemäß der Beschreibung frei auf die Ladeflächen serienmäßiger Pritschenfahrzeuge gesetzt, womit danach die Verteilung erfolgt.

Es ist leicht erkennbar, daß bei solcher Ausgestaltung der Einrichtung sich der Behälter bzw. das Verfahren kaum dafür eignet, ein volles Sortiment von Lebensmitteln, auch Gefrier- und Warmkost umfassend, während einer mehrere Stunden dauernden Auslieferungtour dem Kunden in einwandfreier Qualität zuzustellen. Dies wäre allenfalls mit Stapelware in Fertigpackungen denkbar, solange diese eine den Pharmapackungen vergleichbare Robustheit und deren i.A. kleine Abmessungen aufweisen.

Bei der Belieferung von Apotheken durch den Großhandel kann auch davon ausgegangen werden, daß dieses während der Geschäftszeit erfolgt und damit der Empfänger sicher angetroffen wird. Dieses ist jedoch bei privaten Kunden gerade tagsüber sehr häufig nicht der Fall, was ein schwerwiegendes und kostentreibendes Problem für Lieferservices z.B. für Tiefkühlkost darstellt.

In der **US-A-5244339** wird ein Verfahren zum Verteilen und Sammeln von Paketen im Stadtbereich beschrieben, welches dazu angelegt ist, zur Lösung innerstädtischer Verkehrsprobleme beizutragen, die dadurch entstehen, daß Lieferfahrzeuge der Post bzw. der Paketdienste während der Auslieferung in Ermangelung freier Parkplätze durch Halten auf dem Fahrweg ein Hindernis für den fließenden Verkehr darstellen.

Schon bei grobem Studium der Schrift wird deutlich, daß das darin vorgeschlagene Verfahren, welches darin besteht, transportable, begehbare und mit den auszuliefernden Paketen gefüllte Container an fest markierten Plätzen der Innenstädte mittels Kranfahrzeugen abzusetzen, danach von dort aus die Verteilung durch Boten vorzunehmen und danach den ggf. mit aufgegebenen Sendungen gefüllten Behälter mit dem Kranfahrzeug zurückzuholen, sich keinesfalls für die Belieferung von Verbrauchern mit Lebensmitteln eignet.

Es ist z.B. leicht einzusehen, daß in einem solchen Container, welcher vorschlagsgemäß ohne Umbauten frei auf einer u.U. bereits von der Sonne erhitzten Straße oder Plattform abgesetzt wird und welcher der Sonne dann weiterhin ausgesetzt wird, sehr schnell hohe Temperaturen entstehen, die zum alsbaldigen Verderb von Lebensmitteln führen können. Kritisch dürfte daneben auch das Problem des Durchfrierens oder auch des Festfrierens eines derart abgesetzten Containers auf dem Stellplatz in der kalten Jahreszeit sein.

In der US-A-5244339 wird zwar erwähnt, daß die in dem Container enthaltenen Pakete in einem Bezirk verteilt werden sollen, es wird jedoch nicht offengelegt, wie dieses im einzelnen geschehen soll und auch nicht, wann damit nach dem Absetzen des Containers begonnen werden soll und wann es beendet sein soll. Das beschriebene Verfahren geht offenbar davon aus, daß die Pakete von einem Paketboten dem Container entnommen werden und daß sie, wie zur Zeit üblich, einem persönlich anwesenden Empfänger ausgehändigt werden, sodaß die Pakete für eine unbestimmte Zeit in dem Container verbleiben und sogar im Falle der Abwesenheit des Empfängers dort hinein zurückgelegt werden müssen.

Das in der US-A-5244339 beschriebene Verfahren löst demnach **nicht** die Probleme, die der Auslieferung leicht verderblicher Waren z.B. von Nahrungsmitteln entgegenstehen. Dagegen wird dies durch das erfindungsgemäße Verfahren auf praktische Weise gelöst.

Es ist nun weiterhin so, daß weder das in der **EP-A-0061127** noch das in der **US-A-5244339** beschriebene Verfahren Lösungen dafür bieten, Verpackungsmaterial einzusparen oder dieses mehrfach einzusetzen. Diese Aufgabe wird ebenfalls durch die vorliegende Erfindung gelöst.

Schließlich ist auch anzumerken, daß die US-A-5244339 ein Verfahren beschreibt, nach dem Container mit den darin enthaltenen Postpaketen auf einem LKW an den Zielort gebracht werden und dort von diesem mit einem unabhängigen Hebezeug, welches auf demselben oder auf einem anderen Fahrzeug montiert ist, abgesetzt werden. Dieses "Kranen" von Ladungsteilen stellt ein in weiten Bereichen der Zulieferung von Waren gebräuchliches Verfahren dar und ist geradezu typisch für den Umschlag von Containern.

Ausgehend vom vorstehend dargelegten Stand der Technik liegt **die zu lösende technische Aufgabe** darin, ein Verfahren und für seine Durchführung geeignete Einrichtungen zu schaffen, das die bestellungsgemäße Kommissionierung von Lebensmitteln und anderen Waren und deren Anlieferung vorzugsweise in private Haushalte erlaubt, wobei die z.Z. beim Transport von Lebensmitteln und deren Lagerung, sowie durch die Produktion, die Verwendung und die Entsorgung von Verpackungen entstehenden Umweltbelastungen reduziert werden.

Diese Aufgabe wird in dem vorschlagsgemäßen Verfahren durch die kennzeichnenden Merkmale des Hauptanspruches 1 gelöst, sowie in Ausgestaltung durch die Ansprüche 2 und 3, durch die kennzeichnenden Merkmale der Anprüche 6 und 7, 11 bis 13, und durch die kennzeichnenden Merkmale der Ansprüche 15 - 17.

Das erfindungsgemäße Verfahren vermeidet den in der US-A-5244339 beschriebenen Aufwand für das Absetzen eines Sammelcontainers. Ein Hebezeug wird am Lieferort nicht benötigt. Die in den Umlaufbehältern sich befindende Ware ist während des Transportes bis zur Auslieferung und auch nach Einsetzen in Depotcontainer vollkommen vor Außeneinflüssen geschützt. Das erfindungsgemäße Fahrzeugkonzept erlaubt in Verbindung mit integrierten Wechselgestellen in einer bevorzugten Ausgestaltung die Auslieferung von Lebensmitteln, auch von Gefrierkost oder von Warmmenues sowie auch von unverpackter Ware bei jeder Witterung ohne daß an diesem Gestell Türen oder Klappen für den Schutz der darin befindlichen Ware erforderlich sind.

Zur Entnahme der Umlaufbehälter muß bei der Auslieferung weder die Ladefläche des Fahrzeugs noch der Laderaum eines Containers betreten werden. Die Umlaufbehälter werden erfindungsgemäß dadurch freigegeben und können entnommen werden, daß die Wechselgestelle, in denen die Umlaufbehälter für die Auslieferung untergebracht sind, gemäß einer vorzugsweisen Ausbildung der Erfindung für den Zugriff mittels Führungen aus dem Fahrzeug herausbewegt werden.

Das im Weiteren noch näher erläuterte Verfahren für die Verteilung von Lebensmitteln reduziert in den bevorzugten Ausführungsformen gegenüber der heute gebräuchlichen Logistikkette den Material-, den Transport- und den Zeitaufwand. Beispielhaft seien hier einige der sich ergebenden Vorteile genannt, die sich auf den Verbraucher, auf die wirtschaftlich beteiligten Unternehmen und auf die Volkswirtschaft auswirken:
- Weil die Nahrungsmittel erst unmittelbar vor der Auslieferung geteilt werden und ihre Oberfläche erst zu diesem Zeitpunkt vergrößert wird und wegen der verkürzten Verweilzeiten der Waren in den Packungen bedarf es **keiner chemischen Konservierung** oder der Haltbarmachung durch spezielle Packstoffkombinationen mehr! Die Gefahr des Austrocknens oder des Wasserzutritts oder der Verlust oder die Übertragung von Gasen und Aromen, welche u.a. die Ursache für z.Z. aufwendige Verpackungen sind, treten in den Hintergrund.
   Schwerentsorgbare Verbundpackstoffe müssen nicht mehr eingesetzt werden.
- Das Aufkommen von Verpackungsmaterial wird entscheidend reduziert, da die zum Einsatz kommenden Transportbehälter und die in der vorzugsweisen Ausgestaltung vorgeschlagenen Verpackungsmaterialien (z.B. Glas, Papier, die Kunststoffe PP, PET, bzw. Packstoffe auf Basis nativer Rohstoffe) für den gleichen Zweck wiederverwendet oder renaturiert werden können.
- In der bevorzugten Ausgestaltung der Logistikeinrichtungen wird die Kühlkette nicht, wie bei heutigen Einkäufen und besonders an warmen Tagen, unterbrochen.
- Es können die vom Kunden gewünschte Mengen eines Lebensmittels geliefert werden (auch Kleinstmengen), darüberhinaus Warmmahlzeiten oder Rezeptzusammenstellungen für eine Mahlzeit. Die private, verlustreiche Vorratshaltung mit den Risiken des Verderbs kann entfallen.
- Die Anwesenheit des Empfängers bei der Auslieferung der Waren ist nicht erforderlich.
- Die vorgeschlagene Verfahren des Warenbezugs in Großgebinden mindert entscheidend das Transportvolumen und fördert die Regionalisierung der Lebensmittelversorgung.
- Die erfindungsgemäße Ausgestaltung der Fahrzeuge erlaubt die vollständige Ausnutzung des Koffervolumens und damit bei festgelegter Anzahl der aufzunehmenden Umlaufbehälter kleinstmögliche Fahrzeugabmessungen.
- Durch die Nutzung von Depotcontainern entfallen vergebliche Anfahrten beim Empfänger.

Nachstehend wird ein beispielhafter Verfahrensablauf beschrieben und es werden eine detaillierte Darstellung der erfindungsgemäßen Einrichtungen und die weitere Abgrenzung gegenüber dem Stand der Technik vorgenommen:

### 1. Das Angebot (Stand der Technik)

Der Kunde kann über die lokalen Medien auf die Angebotspreislisten mehrerer Wettbewerber zugreifen. Ebenso werden ihm aktuelle Angebote schriftlich oder elektronisch zugestellt. Er kann weitere Informationen, wie z.B. Rezeptvorschläge und dazu erforderliche Zutaten (wenn keine eigene Bevorratung angestrebt wird), aus einem Informationsservice abrufen. Preisangaben erfolgen gemäß Gesetz je 100g, je kg oder je Stück der Ware.

### 2. Der Bestellvorgang (Stand der Technik)

Die Bestellung erfolgt über Telefon, Fax, TV/BTX (aktiv), Computer/Modem oder spezielle Terminals (sog. handhelds). Vereinfachungen und Fehlerfreiheit können durch Bedienerführung und bereits gebräuchliche Abprüfverfahren erreicht werden (ähnlich wie Programmierhilfen für die Videoprogrammierung).

Ist die Bestellung aufgelistet, wird kann sie durch Betätigen einer Auslösetaste geschlossen in das Kommissionierzentrum übermittelt werden. Dort erfolgen ein Plausibilitätstest und eine Warenbestandsprüfung. Bei Fehlerfreiheit kann dem Kunden über das Kundenterminal der Auftrag mit einer Auflistung der Waren, mit Preisen und Lieferzeit in Klartext (ähnlich Fax-Quittierung) bestätigt werden. Gegebenenfalls kann nun noch storniert und korrigiert werden.

Eine Bestellung kann auch von unterwegs abgesetzt werden, z.B. vom Arbeitsplatz. Die Bestätigung erfolgt vorzugsweise auch dann über das Terminal.

In der Kommissioniereinrichtung gehen die Verbraucher nicht selbst einkaufen, wie heute in Discount-Super- oder Verbrauchermärkten. Die Kunden können Waren nur von außen bestellen.

### 3. Die Warenkommissionierung

Zur Durchführung der Kommissionierung der Waren bedarf es einer Kommissioniereinrichtung. Vorschlagsgemäß werden von dieser die Waren, welche insbesondere Lebensmittel sein können, hauptsächlich **nicht** in für die Selbstbedienung hergestellten Fertigpackungen von den Herstellern (z.B. Industrie oder Lebensmittelhandwerk) bezogen, wie dies im Lebensmitteleinzelhandel üblich ist, sondern vorzugsweise in ungeteilten Großmengen, möglicherweise auch in verbrauchsgerecht vorgeteilten Mengen, welche auch vorabgepackt sein können, die so disponiert werden, daß der Umschlag bei Frischwaren in wenigen Stunden und im Trockensortiment in wenigen Tagen erfolgt. (z.Z. beträgt der Durchlauf in der Lebensmittellogistik im Trockensortiment durchschnittlich 50 Tage und der Umschlag im LEH beträgt durchschnittlich 30 Tage!).

Die Anlieferung der Lebensmittel in besagtes Kommissionierzentrum erfolgt vorzugsweise, je nach Art der Förderfähigkeit, in Tankfahrzeugen, Kleincontainern, Fässern (Hobbocks), in Kästen, in Horden oder auf Stikken sowie in Laiben und in anderen Gebindeformen.

Ebenso wie die durch das Kommissionierzentrum hergestellte Verpackungen vorschlagsgemäß aus einfachem, standardisiertem Material hergestellt werden, kann sich auch die bereits für die Kundenbelieferung vom Hersteller vorgesehene Vorverpackung, sofern sie notwendig ist, wegen der kurzen Frist zwischen der Herstellung der Ware und der Ablieferung im besagten Zentrum bzw. beim Verwender auf einen einfachen Einschlag der Ware bzw. der umlaufenden Gebinde aus einem ebensolchen Material beschränken.

Vor der Wiederbefüllung werden die entleerten Behälter und Warenträger gewaschen bzw. gereinigt. Folien und Netze können der stofflichen Wiederverwendung zugeführt werden.

### 4. Die Bestellausführung

Für jede Ware kann ab einem Minimum jedes Gewicht abgerufen werden. Bei stückigen Gütern zählt das nächste volle Stück.

Die Portionierung der Waren erfolgt mit bekannten technischen Einrichtungen. Automatisches Abfüllen ist auf einfache Weise bei schütt- und fließfähigen Gütern aus Silos möglich. Feste und pastenartige Güter (Käse, Wurst, Fett etc.) werden automatisch portioniert, wobei eine Gewichtsfehlergrenze eingehalten wird. Bei Bestellung einer individuellen Warenmenge, z.B. von 100g, erhält der Kunde also u.U. nicht genau diese 100 g, sondern beispielsweise Ware in einem Gewichtsbereich von 95-105 g, je nach technischer Machbarkeit. Entsprechend wird auch fakturiert (Die für Fertigpackungen vorgeschriebenen privilegierten Gewichte müssen nicht eingehalten werden, wenn die gesetzlich alternativ vorgeschriebenen Preisangaben für 100g bzw. 1 kg der Waren gemacht werden).

Im Fleischbereich werden die Zerlegung und Portionierung zunächst maschinenunterstützte Handarbeit bleiben. Obst, Salat und Frischgemüse können vorgereinigt und behältergerecht portioniert werden. Nach dem Abteilen und Wiegen werden feste Waren vorzugsweise in Netze, pastenartige Waren in Beutel oder Näpfe eingebracht, die in einer bevorzugten Ausführungsform aus einem einheitlichen, wiederverwendbaren Kunststoff, vorzugsweise einem Polyolefin bestehen.

Flüssigkeiten werden in Behälter abgefüllt, die aus Glas oder ebenfalls bevorzugt aus einem für die erneute Verwendung geeigneten Kunststoff bestehen (z.B. PET).

Das vorgeschlagene Verfahren für die Distribution von Lebensmitteln eignet sich in ganz besonderer Weise für den Einsatz von Packstoffen aus nativen Rohstoffen. Sie erfüllen in besonderem Maße das Kriterium der Rohstoffeinsparung sowie das der Renaturierung durch Kompostierung/Verfütterung.

In der weiteren Ausbildung der Erfindung wird es als zweckmäßig erachtet, die Gefäße zu modularisieren und in ihrer Form und Größe auf die Innenabmessungen der Umlaufbehälter für die Auslieferung abzustimmen.

Nach dem Befüllen werden die Behälter verschlossen, möglicherweise evakuiert, etikettiert, zusammengefahren und kundenbezogen in die Umlaufbehälter eingesetzt.

Entsprechend dem Bedarf der Kunden (Familien, Wohngemeinschaften) bzw. der Depotkapazität können für größere Bestellungen mehrere Behälter benutzt werden.

Die fertig kommissionierten Umlaufbehälter können eine Warenliste mit Rechnungsbeleg und ggf. weiteren Informationen erhalten, werden verschlossen, der Tourenkommissionierung überstellt, wo sie erfindungsgemäß in die in Abschnitt 6.1. beschriebenen Wechselgestelle eingebracht werden.

Für eine Übergangszeit kann es notwendig sein, auch Fertigpackungen der Hersteller zu kommissionieren.

### 5. Umlaufbehälter (Stand der Technik)

Die Umlaufbehälter haben die Aufgabe, die kommissionierte Ware während der Auslieferung zusammenzuhalten und zu schützen. Sie üben in dem System eine Schlüsselfunktion aus. Das gesamte Kommissionier- und Logistiksystem wird darauf abgestimmt. Es ist daher vor der endgültigen Festlegung der Ausführung eine gründliche Test- und Optimierungsphase zu durchlaufen.

Für Kühl- oder Warmware (Fertigmenüs) können die Behälter mit Isoliereinsätzen (z.B. aus wasch- und regenerierbarem EPS) ausgerüstet werden.

Das Volumen der Behälter stellt einen Kompromiß zwischen dem Handling, der Minimierung der Umläufe bzw. der Anlieferungen, der Deckung des Bedarfs an Lebensmitteln für unterschiedliche Abnehmer sowie den technischen Gegebenheiten der Einbauten, Fahrzeuge etc. dar.

Das optimale Volumen wird für die Anlieferung von Lebensmitteln in private Haushalte zwischen 10 und 15 Litern gesehen, was z.B. durch einen DIN/ISO Kasten der Abmessungen 200 x 400 x 180 mm (Euro-Norm) repräsentiert wird. In diesem Format lassen sich nahezu alle gebräuchlichen Lebensmittel unterbringen (z.B. auch Baguettes). Es ist leicht vorstellbar, daß auch andere Kastenmaße den gewünschten Zweck erfüllen.

Weitere Einbindungen in bestehende Normen sind anzustreben. Ideal ist ein einheitliches Behältersystem, das vom Hersteller (z.B. Industrie) bis zum Verbraucher eingesetzt werden kann.

Die weiteren Anforderungen, die die Umlaufbehälter im Hinblick auf die Konstruktion, die Gebrauchseigenschaften sowie die Wirtschaftlichkeit des Einsatzes vorteilhaft erfüllen sollten, sind im folgenden aufgelistet:

### 5.1. Konstruktive Eigenschaften

- glattwandige, einfache Konstruktion
- verwindungssteif, beulfest, robust
- verschließbar (Deckel aufrastbar, aufschiebbar)
- geringes Gewicht
- waschbar (seibstauslaufend)
- umlauffähig
- schubführungsfähig (Boden,Seite)
- zusammenlegbar bzw. für Raumsparstapelung geeignet (für Rücktransport und Lagerung)
- stapelstabil
- Belegfach an Deckel/Zarge
- codierungsfähig (Schieber, Setzmarke, Magnetstreifen)
- modul- und normungsfähig
- für den gleichen Einsatzzweck stofflich wiederverwertbar
- optisch ansprechend

### 5.2. Gebrauchseigenschaften

- einfache Hantierung, Transportierbarkeit (Kinder, alte Menschen)
- keine Verletzungsgefahr (Schneiden, Klemmen)
- kein Lack, kein Abrieb
- lebensmittelgeeignet, geruchsneutral
- bedarfsgerechtes Volumen (Testphase)
- Temperaturbereich +120°C/-50°C
- kühlfähig durch einsetzbare Kälteakkus
- isolierbar (zusätzl. Material)
- nicht zweitnutzengeeignet (z.B. als Einkaufs-, Koch-, Brat- oder Vorratsbehälter)
- Kennung durch Farbcodierung (Einfärbung)
- gefüllte Innenbehälter leicht entnehmbar

### 5.3. Wirtschaftlichkeit

- kostengünstige Herstellung in Großserie (pressen, spritzen)
- robust, korrosionsfest
- bepfandbar
- durchgängige Norm vom Hersteller bis zum Verbraucher

Für den Leergutrücktransport sollte das Volumen der Behälter auf wenigstens 1/3 reduziert werden können. Dies kann sowohl mit formfesten (einteiligen) als auch mit klappbaren oder zerlegbaren Behältern erreicht werden.

Für formfeste Behälter sprechen:
- die Stabilität
- das einfache Handling
- die kostengünstige Herstellung

(Es ist jedoch ein separater Deckel erforderlich)

Mit der o.g. Forderung nach Volumenreduktion im Rücklauf geht in jedem Fall ein Verlust des nutzbaren Füllvolumens einher. Diesen Verlust gilt es zu minimieren.

Beispielhaft lassen sich die Bedingungen mit einem modifizierten System des marktreifen MTS (Mehrwegtransportsystem von Tengelmann/Schoeller) erfüllen. Z.Z. läßt jedoch ein Kasten mit den Abmessungen 200 x 400 x 150 bei Verwendung eines identischen Boden- und Deckelteiles sowie eines Zwischenrahmens eine Reduktion des Volumens auf nur 50 % zu.

Werden die Boden/Deckelteile jedoch beispielsweise mit einer Höhe von 30 mm (anstelle von 37,5 mm) und der Zwischenrahmen mit einer Höhe von 120 mm (anstelle von 75 mm) ausgeführt, so ist das System auf ein Volumen von 1/3 reduzierbar. Es ist dennoch CCG-konform in den Stufungen 30, 60, 150, 180, 300 mm und somit auch für die Lieferbeziehung Hersteller - Kommissionierzentrum einsetzbar.

### 6. Die Auslieferung

Die Kundenbelieferung erfolgt in den Lieferbezirken mit den Verteilerfahrzeugen vorzugsweise nach Fahrplänen, sodaß der Kunde die Wartezeit zwischen der Bestellung und der Auslieferung der Ware kennt. Wie schon erwähnt, kann ihm dann der Lieferzeitpunkt mit der Auftragsbestätigung genannt werden.

Für die sofortige Anlieferung kann auch ein Kurierdienst aktiviert werden. Die Abholung/Mitnahme der Ware am Kommissionierzentrum durch den Kunden oder durch eine beauftragte Person kann ebenso wahlweise ermöglicht werden.

### 6.1. Verteilerfahrzeuge

Die Fahrzeuge sollten sich durch ihre Konstruktion für die schnelle Verteilung der Umlaufbehälter eignen. Die Größe, Manöverierfähigkeit und das zulässige Gesamtgewicht müssen die Erschließung auch enger Wohnbebauung ohne LKW-Zufahrten ermöglichen.

Für einen Auslieferungskurs von max. 4 Stunden (entspricht etwa 160 vollen und ebenso vielen leeren Behältern) ist eine Nutzlast von ca. 1 t ausreichend,

Ein dementsprechendes Fahrzeug kann dreirädrig oder vierrädrig mit Einzelradaufhängung ausgeführt werden. Das/die Vorderräder sind lenkbar. Vorteilhaft enthalten sie Radmotoren, ggf. mit integriertem Getriebe. Die Hinterräder können antriebslos und aus konstruktiven Gründen von geringerem Durchmesser sein.

Da ausschließlich befestigte Wege befahren werden, ist eine Bodenfreiheit von ca. 150 mm ausreichend. Bei Raddurchmessern von ca. 500 mm vorn und von ca. 300 mm 30 hinten wird ein Achsabstand von ca. 3000 mm erreicht. Durch extremen Einschlag der Lenkräder ist damit das Wenden auch in Wohnstraßen möglich.

Der zwischen den Vorderrädern verbleibende Raum eignet sich zum Einbau der Fahrstrombatterie. Für den Batteriewechsel können Führungshilfen vorgesehen werden, die zunächst ein Vorrücken der Batterie auf dem Boden des Fahrerhauses und danach das seitliche Herausfahren erlauben oder den Batteriewechsel nach unten ermöglichen.

Das Fahrerhaus (3) ist zweckmäßigerweise asymmetrisch aufgeteilt. Der Fahrersitz kann verfahrbar sein, um ein bequemes Ein- und Aussteigen zu ermöglichen.

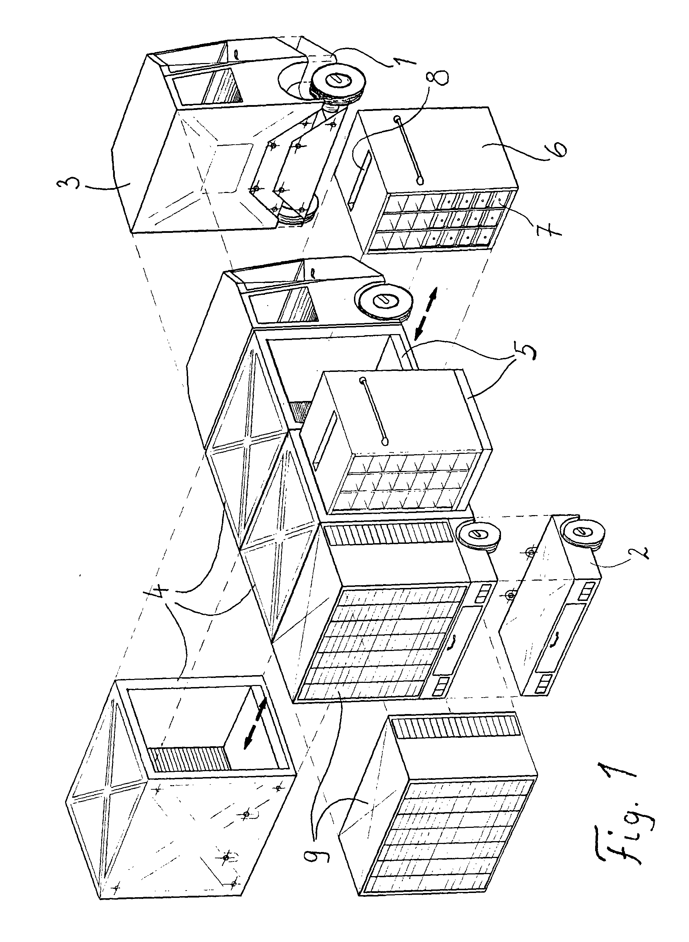

Es ist weiterhin von Vorteil, mindestens die rechte (in Ländern mit Linksverkehr die linke) Seite des Fahrerhauses gem. Fig.1 seitlich einzuziehen, um damit den Wenderadius in Linkskurven (üblicher Parkverkehr) zu verringern. Zweckmäßig und für Lieferfahrzeuge üblich sind Schiebetüren auf beiden Seiten. Zum Verholen des Fahrzeugs müssen sie nicht geschlossen werden.

In einer bevorzugten Ausführungsform der Erfindung wird ein Fahrzeug vorgeschlagen, das einen modularisierten und ggf. selbsttragenden Aufbau hat. Ein derartiger Aufbau besteht, wie in **Fig.1** beispielhaft dargestellt, aus anreihbaren und direkt miteinander verbundenen Blechrahmengehäusen (4). Vorteilhaft kann dann auf eine Bodengruppe verzichtet werden. Es werden nur die Fahrschemel (1,2) sowie das Fahrerhaus (3) benötigt, welche direkt mit den selbsttragenden Gehäusen verbunden werden. Vorzusehende, geeignete Verrippungen und sich in Fahrzeuglängsrichtung erstreckende Mittelwände geben dem Fahrzeug eine ausreichende Verwindungssteifigkeit.

In der bevorzugten Ausführung der Erfindung gemäß **Fig. 1** sind besagte Blechrahmengehäuse (4) seitlich offen und enthalten zu den Seiten herausbewegbare Schubführungen (5). Diese eignen sich zum Aufsetzen oder Aufschieben und Verrasten der regalähnlichen Wechselgestelle (6) mit den Umlaufbehältern (7). Die Schubführungen mit den Wechselgestellen können dann in die Gehäuse (4) eingeschoben und darin wiederum verriegelt werden.

Bei der in **Fig.1** dargestellten bevorzugten Ausführung des Lieferfahrzeuges können je zwei Wechselgestelle von beiden Seiten in die Blechrahmengehäuse eingeschoben werden. Ein weiteres Wechselgestell für den Rücktransport leerer, volumenreduzierter Behälter (9) kann besagtes Fahrzeug auf dem hinteren Fahrschemel aufnehmen. Darin können die Behälter gegen Herausfallen durch Klappen, Schiebetüren, Rolläden o.ä. gesichert werden.

Gemäß der bevorzugten Ausführungsform in **Fig.1** sind weiterhin die Umlaufbehälter in den Wechselgestellen so angeordnet, daß sie bei seitlichem Herausfahren der Schubführungen mit den Gestellen, was auch servounterstützt erfolgen kann, zugänglich werden. Das ermöglicht auf den Fahrzeugseiten eine geschlossene, türfreie und isolationsfähige Karosserie, die optimale Nutzung des Koffervolumens und den schnellen Zugriff des Personals auf die Umlaufbehälter bei Auslieferung.

Die Gehäuse (4), in denen temperaturgeführte Waren transportiert werden sollen, können gemäß der Weiterbildung der Erfindung isoliert ausgeführt werden. Ebenso ist dann vorgesehen, die Außenwände der Wechselgestelle (6) zu isolieren.

Bei derartiger Ausführung können die Wechselgestelle in vorteilhafter Weise mittig - zwischen den Gefachen für die Umlaufbehälter - einen Schacht (8) für einen plattenförmigen Kälteakku aufweisen. Dorthinein kann ein Akku bei Beladung mit Gefriergut eingesetzt werden, wodurch sich das Mitführen eines Kälteaggregates im Fahrzeug erübrigt.

Es können weiterhin Formelemente für den Eingriff eines Hebezeugs am oberen Rand des Schachtes (8) sowie auf dem Gehäusedach des Wechselgestelles (9) vorgesehen werden. Vorteilhaft werden die Wechselgestelle jedoch nicht gekrant, sondern auf die Schubführungen (5) bzw. auf den Fahrschemel (2) aufgeschoben.

Vor jeder Tourenaufrüstung werden außerhalb des Fahrzeugs die Wechselgestelle tourengemäß mit den gefüllten Umlaufbehältern bestückt. Auf diese Weise können die Fahrzeuge in wenigen Minuten lieferbereit gemacht werden.

Dem Fahrer können weiterhin Hilfsmittel zur Auslieferung zur Verfügung stehen, z.B. Routenplan, Auslieferungsliste für die Zuordnung der Umlaufbehälter zu den Kunden, besagter Caddy für den Vororttransport (z.B. im hinteren Fahrschemel unterbringbar), Masterschlüssel oder Code für die Depotcontainer und anderes. Vorteilhaft ist überdies eine Einrichtung zum Verholen des Fahrzeugs von außen.

### 6.2. Depotcontainer

Erfindungsgemäß befinden sich die Depotcontainer bei den Kunden z.B. in oder an deren Wohnhaus/Wohnung in einem von außen zugänglichen Bereich, sodaß die Anlieferung der Waren die Anwesenheit des Kunden oder eines Vertreters nicht erforderlich macht. Das Auslieferungspersonal beschickt den Container mit den gefüllten Umlaufbehältern. Hierzu verfügt es über einen Generalschlüssel bzw. den Code zum Öffnen und zum Wiederverschließen der Containertür. Die Kunden können in den Containern die entleerten Umlaufbehälter zur Rücknahme durch das Lieferpersonal bereitstellen. (Die entleerten Innenbehälter (Beutel, Näpfe und Flaschen u.s.w.), die noch mit Ware kontaminiert sein können, werden gesondert zurückgeführt).

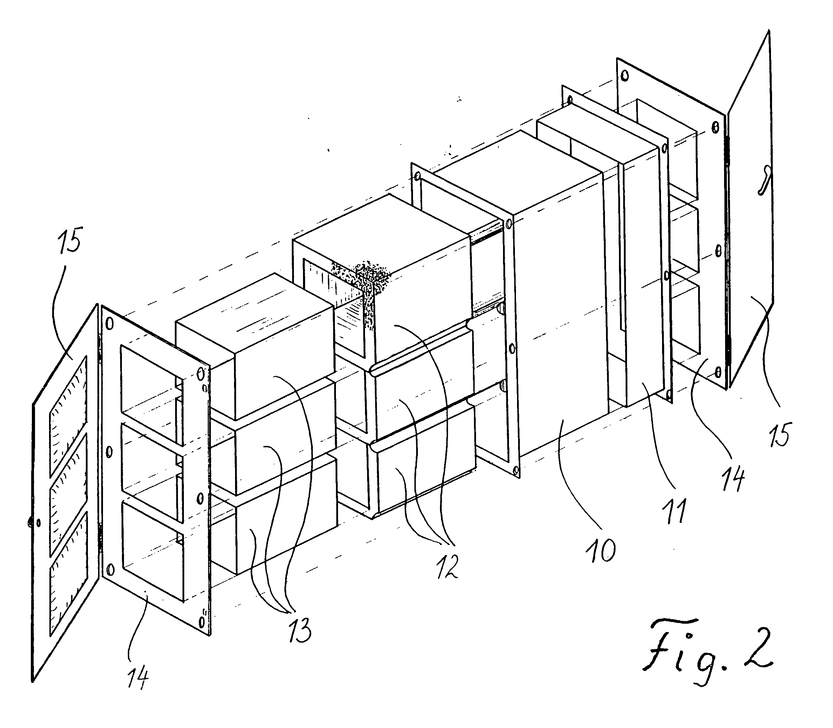

In einer bevorzugten Ausführungsform (**Fig. 2**) erfüllen die Depotcontainer folgende Anforderungen:
- Eignung des Containerrahmens für universellen Einbau in Wände, Pfosten, Großcontainer etc.
- Standardrahmen für 1- 3 Schächte, übereinander und seitlich anreihbar (Normung)
- Schächte, einzeln einsetzbar, isolierbar
- isolierte Schächte optional kühlbar durch ein Kälteaggregat (Modul)
- selbsttätiges Initiieren der Kühlung durch einen Sensor/Initiator bei Beschickung mit temperaturgeführter Ware.
- Beschickbarkeit und Entnahme bei Hauseinbau von außen und von innen
- abschließbar, einbruchsicher, tampersicher

Weiterhin sind vorteilhaft:
- zugluft- und kältebrückenfreie Konstruktion
- Füllzustandskontrolle durch Sichtfenster
- leicht zu reinigen
- optisch ansprechend
- Bestandteile aus recyclingfähigen Materialien (Stahl/Aluminium/Kunststoff)

Die erfindungsgemäß vorgeschlagenen Depotcontainer enthalten außer Türen/Klappen sowie dem optionalen Kälteaggregat keine beweglichen Teile und sind daher langlebig und weitgehend wartungsfrei.

In Weiterbildung der Erfindung kann ein Kälteaggregat (in Fig. 2 nicht dargestellt) über oder neben dem Container in das umgebende Bauteil eingesetzt und an die zu kühlenden Schächte angeschlossen werden. Wird es unmittelbar in den obersten Schacht eingesetzt, so entfällt dort die Isolierung und eine Lüftung ist vorzusehen.

### 7. Fakturierung und Bezahlung (Stand der Technik)

Die Bezahlung der Ware kann im Abbuchungsverfahren wie auch heute schon erfolgen, wenn per Karte gekauft wird. Der Kunde erhält vorzugsweise monatlich eine warengruppengeordnete Abrechnung mit dem Kaufdatum aller Waren. Dies erspart Haushalten, die ein Haushaltsbuch führen, diese Arbeit.

Selbstverständlich kann ein Einkaufszentrum eine Kundenbindung durch mengenbezogene Rabatte aufbauen, Umsatzprämien oder Treuerabatte gewähren oder andere Maßnahmen zur Kundenwerbung einführen.

### Zeichnungen (2)

**Fig.1** zeigt in einer vorzugsweisen Ausführung einen modularisierten Aufbau des erfindungsgemäßen **Verteilerfahrzeuges,** bestehend aus den beispielhaft dargestellten Komponenten:
Bodengruppe, bestehend aus vorderem und hinterem Fahrschemel, Fahrerhaus, Beispiele für Blechrahmengehäuse mit den Schubführungen für die Wechselgestelle, ein beispeilhaft aufgesetztes Wechselgestell in ausgezogenem Zustand, ein Wechselgestell mit beispielhafter Gefacheinteilung für auszuliefernde Umlaufbehälter (hier teilgefüllt dargestellt) , sowie ein Wechselgestell für leere, volumenreduzierte Umlaufbehälter.

Es bedeuten:
1 = Bodengruppe für das Fahrerhaus
2 = Hinterer Fahrschemel mit Caddykasten
3 = Fahrerhaus
4 = Blechrahmengehäuse für die Aufnahme der Wechselgestelle
5 = Schubführungen für Wechselgestelle
6 = Wechselgestell für die Aufnahme der auszuliefernden Umlaufbehälter
7 = Umlaufbehälter
8 = Schacht für Kälteakku
9 = Wechselgestell für leere, volumenreduzierte Umlaufbehälter

**Fig.2** zeigt beispielhaft die Elemente für die vorzugsweise Ausführung eines Depotcontainers mit drei zur Aufnahme der Umlaufbehälter geeigneten Schächten und mit Zugänglichkeit von außen und von innen. Er besteht aus einem Einbaurahmen (Innenteil und Stülpteil) für den Wandeinbau, schachtweise anreihbaren Isolierelementen, dorthinein einschiebbaren und wahlweise als Verdampfer ausbildbaren Schachteinsätzen, Abdeckrahmen (Blenden), sowie Türen mit Isolierbekleidung. Dichtungen und Distanzstücke sind weggelassen.

Es bedeuten:
10 = Einbaurahmen (Innenteil)
11 = Einbaurahmen (Stülpteil)
12 = Schachtelemente aus Isoliermaterial
13 = Schachteinsätze (wahlweise als Verdampfer ausgebildet)
14 = Abdeckrahmen
15 = Tür mit Isolierbekleidungen

## Patentansprüche

1. Verfahren zum Verteilen von Waren, vorzugsweise von Lebensmitteln, die angeboten werden und die fernmündlich, fernschriftlich oder auf andere Weise in Kommissionierzentren bestellt werden, **dadurch gekennzeichnet, daß**
die Waren von den Erzeugern bzw. Herstellern vorzugsweise in Tanks, Großgebinden, Großlaiben etc., bzw. in Verbrauchsmengen abgepackt, im Wesentlichen jedoch nicht in für die Selbstbedienung hergestellten Fertigpackungen in besagten Kommissionierzentren angeliefert werden, daß besagte Zentren von den Waren bestellungsgemäße Mengen oder Gewichte abteilen, daß die bestellungsgemäß abgeteilten Waren je Auftraggeber unverpackt oder verpackt in Umlaufbehältern (7) zusammengefaßt werden, wobei im Fall des Verpackens in besagten Zentren einheitliche, wiederverwendbare Packstoffe zum Einsatz kommen, daß besagte Umlaufbehälter tourenbezogen in Wechselgestelle (6) eingebracht und die beladenen Wechselgestelle ihrerseits dem Lieferbezirk entsprechend in Lieferfahrzeugen untergebracht werden, worin besagte Umlaufbehälter dem Auftraggeber zugestellt werden, wobei besagte Behälter an einem vom Auftraggeber bestimmten Ort in Depotcontainer eingebracht und nach Entleerung von dort wieder zurückgeholt werden und daß die gesamte Auftragsabwicklung in Abwesenheit des Auftraggebers erfolgt und die gelieferte Ware auch nicht durch eine bei Lieferung anwesende Person entgegen genommen werden muß.

2. Verfahren zum Verteilen von Waren nach Anspruch 1, **dadurch gekennzeichnet, daß** besagte Kommissionierzentren für das Verpacken der Waren Beutel, Netze oder Näpfe verwenden und daß als einheitlicher, wiederverwendbarer Packstoff vorzugsweise ein Polyolefin eingesetzt wird und daß als einheitlicher, wiederverwendbarer Packstoff für Flaschen z.B. Glas oder PET verwendet wird, oder daß Packmittel aus nativen Rohstoffen eingesetzt werden.

3. Verfahren zum Verteilen von Waren nach Anspruch 2, **dadurch gekennzeichnet, daß** besagte Näpfe und Flaschen in Größe'und Form auf die Innenabmessungen der Umlaufbehälter abgestimmt und daß diese verschließbar sind.

4. Verfahren zum Verteilen von Waren nach Anspruch 1, **dadurch gekennzeichnet, daß** weitere, beispielsweise herkömmlich verpackten Waren, Nonfood, Post, Printmedien, bzw. weitere Informationen auf Datenträgern der Lieferung beigefügt werden.

5. Verfahren zum Verteilen von Waren nach den Ansprüchen 1 - 4, **dadurch gekennzeichnet, daß** der Auftraggeber Endverbraucher ist und daß der Ort der Anlieferung das Haus, die Wohnung, der Arbeitsplatz oder ein anderer Aufenthaltsort des Auftraggebers ist oder daß er in dessen Nähe liegt.

6. Verfahren zum Verteilen von Waren nach Anspruch 1, **dadurch gekennzeichnet, daß** die zur Auslieferung der Waren bestimmten Lieferfahrzeuge zur Aufnahme von Umlaufbehältern (7) bestimmten Wechselgestellen (6) dadurch geeignet sind, daß sie jeweils über mindestens ein Blechrahmengehäuse (4) verfügen, das die Wechselgestelle aufnimmt.

7. Verfahren zum Verteilen von Waren nach den Ansprüchen 1 und 6, **dadurch gekennzeichnet, daß** die Blechrahmengehäuse besagter Lieferfahrzeuge über Schubführungen (5) für die Wechselgestelle verfügen, die so aus dem Fahrzeug bewegt werden können, daß die Wechselgestelle mittels eines Hebezeuges oder durch Aufschieben mit den Schubführungen verbunden werden können, und daß mittels besagter Schubführungen die Wechselgestelle am Lieferort soweit aus den Fahrzeugen herausbewegt werden können, daß die auszuliefernden Umlaufbehälter zur Entnahme freigegeben werden.

8. Verfahren zum Verteilen von Waren nach den Ansprüchen 6 und 7, **dadurch gekennzeichnet, daß** die Blechrahmengehäuse anreihbar sind und daß sie selbsttragend zwischen jeweils einem vorderen Fahrschemel bzw. der Fahrerkabine und einem hinteren Fahrschemel der Fahrzeuge montiert werden können.

9. Verfahren zum Verteilen von Waren nach den Ansprüchen 1, sowie 6 - 8, **dadurch gekennzeichnet, daß** besagte Lieferfahrzeuge mit Wechselgestellen, die außerhalb der Fahrzeuge mit den Umlaufbehältern bestückt wurden, beladen werden und daß auch die Entnahme der zurückgeführten Behälter außerhalb der Fahrzeuge erfolgt.

10. Verfahren zum Verteilen von Waren nach den Ansprüchen 6 - 9, **dadurch gekennzeichnet, daß** jeweils eine Außenwand der Wechselgestelle gleichzeitig Außenwand des Fahrzeugs ist.

11. Verfahren zum Verteilen von Waren nach den Ansprüchen 1, bzw. 6 - 10, **dadurch gekennzeichnet, daß** solche Wechselgestelle bzw. solche Bereiche des Fahrzeugs, in denen temperaturgeführte Ware gefahren wird, gegen Temperaturaustausch isoliert ausgeführt werden.

12. Verfahren zum Verteilen von Waren nach Anspruch 11, **dadurch gekennzeichnet, daß** die Wechselgestelle Schächte für den Einschub von Kälteakkus (8) aufweisen.

13. Verfahren zum Verteilen von Waren nach den Ansprüchen 1 - 12, **dadurch gekennzeichnet, daß** besagte Fahrzeuge lärmarm und abgasfrei betrieben werden können, bzw. daß sie über Hybridantriebe verfügen und daß sie über Einrichtungen zum Verholen von außen verfügen.

14. Verfahren zum Verteilen von Waren nach den Ansprüchen 1, 6 - 10, sowie Anspruch 13, **dadurch gekennzeichnet, daß** besagte Fahrzeuge für die Lieferung von Nonfood oder als Werkstattwagen eingesetzt werden.

15. Verfahren zum Verteilen von Waren nach den Anspruch 1, **dadurch gekennzeichnet, daß** besagte Depotcontainer wenigstens einen Schacht (13) zur Aufnahme wenigstens eines Umlaufbehälters aufweisen und daß sie Rahmen bzw. Gehäuse (10, 11) besitzen, welche sich, auch gruppenweise, zum Einbau in Wände, Mauern und Säulen zur freien Aufstellung oder Aufhängung eignen und daß besagte Rahmen bzw. besagte Gehäuse sich durch Anreihen weiterer Rahmen- oder Gehäuseteile so ergänzen lassen, daß die vom Kunden benötigte Anzahl von Umlaufbehältern untergebracht werden kann.

16. Verfahren zum Verteilen von Waren nach den Ansprüchen 1 und 15, **dadurch gekennzeichnet, daß** jeder Schacht besagter Depotcontainer für sich mittels Schachtelementen aus Isoliermaterial (12) temperaturisoliert ausgeführt werden kann.

17. Verfahren zum Verteilen von Waren nach Anspruch 16, **dadurch gekennzeichnet, daß** isoliert ausgeführte Schächte durch einsetzbare Kälteakkus kühlbar sind, bzw. daß dies bei Ausführung der Schächte als Verdampfer mittels eines Kleinkälteaggregates geschieht, welches in das den Container umgebende Bauteil oder an die Stelle eines Schachtes eingesetzt wird.

18. Verfahren zum Verteilen von Waren nach Anspruch 17, **dadurch gekennzeichnet, daß** das Kälteaggregat dadurch anläuft oder einen bestimmten Schacht zuschaltet, daß es die Beschickung mit Kühlgut erkennt.

19. Verfahren zum Verteilen von Waren nach Anspruch 18, **dadurch gekennzeichnet, daß** die Erkennung mittels einer am Umlaufbehälter angebrachten bzw. aktivierten Codierung und einen im Container befindlichen Sensor erfolgt und daß das Kälteaggregat bei Entnahme eines codierten Umlaufbehälters aus einem Schacht diesen Schacht abschaltet bzw. daß bei Entnahme aller zu kühlenden Behälter das Aggregat stillgesetzt wird und daß die Codierung aufgehoben wird.

20. Verfahren zum Verteilen von Waren nach den Ansprüchen 1, sowie 15 - 19, **dadurch gekennzeichnet, daß** die Beschickungen besagter Schächte (13) der Depotcontainer sowie die Entnahmen daraus wahlweise vorderseitig und rückseitig erfolgen können.

21. Verfahren zum Verteilen von Waren nach Anspruch 20, **dadurch gekennzeichnet, daß** im Falle beidseitiger Beschickbarkeit wenigstens die vordere Beschickungsseite (Außenseite) des Depotcontainers über eine abschließbare Tür verfügt.

22. Verfahren zum Verteilen von Waren nach den Ansprüchen1, sowie 15 - 21, **dadurch gekennzeichnet, daß** sich die Schächte für die Bereitstellung entleerter Umlaufbehälter und damit für die Rückführung besagter Umlaufbehälter eignen.

## Claims

1. Procedure for the distribution of merchandise, preferably food, which is offered and which is for order in commission centers by means of telephone, teleprint or by other means, **characterized in that**: said commission centers are furnished by producers and/or manufacturers with this merchandise preferably in tanks, large bundles, large loaves etc., and/or portioned out and packed for direct use, but however, essentially not packed in prefabricated packages destinated for self-service-retail, in that said commission centers portion out of the merchandise quantities or weights pursuant to given orders, in that pursuant to each client the portioned out merchandise, packed or unpacked, is gathered up in circulating transit containers (7), whereby, in the case of packing, the aforementioned centers use homogeneous, reusable packaging materials, in that said circulating transit containers are being brought route-referred into interchangeable racks (6) and that said racks, on their part, are accommodated in delivery vans according to the delivery course, whereby said circulating transit containers are shipped to the customer, at which point the aforementioned transit containers are stored in depositary containers at a place determined by the client and, after emptying, are fetched back again from there and that the execution of the complete order is performed in the absence of the client and that for the term of delivery a cosignee has not to be present to receive the merchandise.

2. Procedure for the distribution of merchandise according to claim 1, **characterized in that**: for the packing of the merchandise said commission centers use bags, nets or cups and that the homogeneous, reusable packaging material is preferably a polyolefin and that e.g. glass or PET is used as homogeneous, reusable packaging material for bottles, or that packaging materials are employed which are made from native raw materials.

3. Procedure for the distribution of merchandise according to claim 2, **characterized in that**: the sizes and shapes of said cups and bottles harmonize with the inside dimensions of said circulating transit containers and that these can be locked.

4. Procedure for the distribution of merchandise according to claim 1, **characterized in that**: further commodities are attached to the delivery, e.g. conventionally packed products, nonfood, mail, printed papers, and/or further information on data carriers.

5. Procedure for the distribution of merchandise according to claims 1 - 4, **characterized in that**: the client is final consumer and that the supply takes place at the client's home, at his dwelling, at his working place or at any other place of residence of the customer or that this place is in his neighbourhood.

6. Procedure for the distribution of merchandise according to claim 1, **characterized in that**: the delivery vans intended for the shipping of the goods are suitable for the take up of said interchangeable racks (6) which contain said circulating transit containers (7) by the fact that they provide at least one metal sheet housing (4), which takes up the interchangeable racks.

7. Procedure for the distribution of merchandise according to claims 1 and 6, **characterized in that**: the metal sheet housings of aforementioned delivery vans comprise linear guides (5) for the interchangeable racks, which can be moved out of the van in such a way that the interchangeable racks can be connected with the linear guides by means of a lifting device or by pushing them and that by means of said linear guides the interchangeable racks can be moved so far out of the vehicles at the place of delivery that said circulating transit containers intended for the delivery are released for collection.

8. Procedure for the distribution of merchandise according to claims 6 - 7, **characterized in that**: the metal sheet housings are such as to allow them to be mounted in a row and that they can be mounted self-supporting between both, a front undercarriage and/or the driver's cab and a rear undercarriage of the van.

9. Procedure for the distribution of merchandise according to claims 1, and 6 - 8, **characterized in that**: said delivery vans are loaded with interchangeable racks, which themselves were furnished with the circulating transit containers outside the vans and that the unloading of the returned circulating transit containers is also completed outside of the vehicles.

10. Procedure for the distribution of merchandise according to claims 6 -9 **characterized in that**: in any case the external wall of the interchangeable racks form, at the same time, a part of the vehicle's body.

11. Procedure for the distribution of merchandise according to claims 1, and/or 6 - 10, **characterized in that**: such interchangeable racks and/or such units of the van, in which temperature controlled merchandise is shipped, provide insulation against temperature interchange.

12. Procedure for the distribution of merchandise according to claim 11, **characterized in that**: said interchangeable racks exhibit slots (8) for the plugging-in of freezing accumulators.

13. Procedure for the distribution of merchandise according to claims 1 - 12, **characterized in that**: said vans can be operated silently and exhaust-free, and/or the fact that they dispose of a hybride motor-drive and that installations are provided to render possible the the manoeuvrability from without.

14. Procedure for the distribution of merchandise according to claims 1, 6 - 10 and claim 13, **characterized in that**: said vans are utilized for the shipping of nonfood or as maintenance trucks.

15. Procedure for the distribution of merchandise according to claim 1, **characterized in that**: said depositary containers exhibit at least one cabinet (13) for the storage of at least one circulating transit container and that they provide frames and/or housings (10, 11) which are suitable for the installation in walls, stonework and pillars, likewise in groups, for free erection or suspension and that the increased number of said frames and/or said housings can be provided by addition of further framework or housing elements in such a way that such number of circulating transit containers as required by the customer can be accommodated.

16. Procedure for the distribution of merchandise according to claims 1 and 15, **characterized in that**: each cabinet of said depositary containers can, itself, be insulated to maintain a temperature by means of constructional components made of insulating material (12).

17. Procedure for the distribution of merchandise according to claim 16, **characterized in that**: insulated cabinets can be cooled by the application of freezing accumulators and/or that cooling happens by means of a small refrigerating machine, which is built into a component adjacent to the container or in the place of a cabinet and the cabinets being designed as evaporators.

18. Procedure for the distribution of merchandise according to claim 17, **characterized in that**: the refrigerating machine starts thereby or switches on a certain cabinet that it recognizes as being loaded with chilled merchandise.

19. Procedure for the distribution of merchandise according to claim 18, **characterized in that**: the recognition is affected by means of an activated coding applied to the circulating transit container and a sensor within the deposit container and that the cooling unit, upon withdrawal of a coded circulating transit container from a cabinet, cuts off this cabinet and/or that with withdrawal of all circulating transit containers which are to be cooled, the refrigerating machine is stopped and that the coding is neutralized.

20. Procedure for the distribution of merchandise according to claims 1 and 15 - 19, **characterized in that**: the loading of said cabinets (13) of the depositary container as well as the withdrawals from it can alternatively be achieved from the front and rear.

21. Procedure for the distribution of merchandise according to claim 20, **characterized in that**: in case of reciprocal feeding options at least the front end (for loading from the outside) of the depositary container provides a lockable door.

22. Procedure for the distribution of merchandise according to claims 1 and 15 - 21, **characterized in that**: the cabinets are suitable for the provision of emptied circulating transit containers and thus for the return of said circulating transit containers.

## Revendications

1. Procédé de distribution de marchandises, notamment de produits alimentaires, qui sont proposées à la vente et qui peuvent être commandées dans des centres de distribution, par téléphone, par fax ou par tout autre moyen, **caractérisé en ce que**
les marchandises sont livrées auxdits centres de distribution par les producteurs ou par les fabricants de préférence en citernes, en colis de grande taille, en blocs, etc. ou bien enveloppés en quantités prêtes à la consommation, mais essentiellement non pas conditionnées dans des emballages de présentation et de vente à libre-service, en ce que lesdits centres de distribution débitent des marchandises les quantités ou les poids individuels selon les différentes commandes, en ce que les différentes marchandises ainsi débitées selon les différentes commandes, sont, emballées ou non emballées, regroupées, client par client, dans des récipients à usage répété (7) et qu'en cas de paquetage dans lesdits centres des matériaux homogènes et réutilisables sont employés, en ce que lesdits récipients à usage répété sont installés, selon l'ordre de livraison, dans des rayonnages interchangeables (6) et en ce que lesdits rayonnages interchangeables sont installés, selon l'ordre de livraison, dans des camionettes de livraison, dans lesquelles lesdits récipients à usage répété sont acheminés chez les clients où ils sont déposés à un endroit désigné par chaque client dans des conteneurs de dépôt d'où, une fois vidés, ils seront repris et en ce que l'ensemble des traitements du commande se fait sans que le client soit présent et qu'aussi au lieu de livraison personne ne doit recevoir les marchandises.

2. Procédé de distribution de marchandises selon la revendication 1, **caractérisé en ce que** pour le paquetage des marchandises lesdits centres de distribution utilisent des sacs, des filets ou des pots et que le matériau d'emballage homogène et réutilisable est de préférance un polyolefine et que le matériau d'emballage homogène et réutilisable employé pour des bouteilles est par exemple de verre ou de PET, ou que les emballages sont fabriqués en des matériaux d'origine naturelle.

3. Procédé de distribution de marchandises selon la revendication 2, **caractérisé en ce que** les dimensions desdits pots et bouteilles sont harmonisées avec les dimensions intérieures desdits récipients à usage répété et que ceux ci peuvent être fermés.

4. Procédé de distribution de marchandises selon la revendication 1, **caractérisé en ce que** d'autres produits peuvent être expédiés avec la livraison ainsi que des marchandises emballées des moyens traditionnels, des produits non alimentaires, de courrier, des imprimés, respectivement des informations stockées en véhicules, etc..

5. Procédé de distribution de marchandises selon les revendications 1 à 4, **caractérisé en ce que** le client peut être le consommateur et que le lieu de livraison est la maison ou l'appartement ou le lieu de travail ou un autre lieu de séjour du client ou que ledit lieu de livraison se trouve à proximité de lui.

6. Procédé de distribution de marchandises selon la revendication 1, **caractérisé en ce que** lesdites camionettes de livraison, pour pouvoir transporter lesdits rayonnages interchangeables (6) destinés à recevoir lesdits récipients à usage répété (7), dispose au moins un coffrage en tôle renforcée (4) qui accueille les rayonnages interchangeables.

7. Procédé de distribution de marchandises selon les revendications 1 et 6, **caractérisé en ce que** lesdits coffrages en tôle de lesdites camionettes de livraison disposent de glissières de guidage (5) pour lesdits rayonnages interchangeables qui peuvent être sorties des côtés desdites camionettes de sorte que lesdits rayonnages interchangeables peuvent être reliés auxdites glissières au moyen d'un système d'élévation ou de coulisse et que, parvenus au lieu de livraison, les rayonnages interchangeables peuvent être sortis des camionettes par moyen des glissières de guidage jusqu'à un point où les récipients à usage répété destinés à la livraison puissent en être enlevés librement.

8. Procédé de distribution de marchandises selon les revendications 6 et 7, **caractérisé en ce que** les coffrages en tôle peuvent être assemblés entre eux et qu'ils peuvent être installés de façon autoportante entre le châssis de l'avant, resp. la cabine, et le châssis de derrière de la camionette.

9. Procédé de distribution de marchandises selon les revendications 1 et 6 à 8, **caractérisé en ce que** lesdites camionettes de livraison sont chargées des rayonnages interchangeables dont léquipement des récipients à usage répété se fait en dehors des camionettes, et que le démontage desdits récipients à usage répété apres leur retour se fait également en dehors des camionettes.

10. Procédé de distribution de marchandises selon les revendications 6 à 9, **caractérisé en ce que** la paroi extérieure de chaque rayonnage interchangeable constitue en même temps la paroi extérieure de la camionette.

11. Procédé de distribution de marchandises selon les revendications 1, aussi que 6 à 10, **caractérisé en ce que** tels rayonnages interchangeables, de même que telles parties de la camionette qui sont destinées à recevoir des marchandises réfrigérées, sont executées en matériau isolant afin d'éviter l'échange des températures.

12. Procédé de distribution de marchandises selon la revendication 11, **caractérisé en ce que** lesdits rayonnages interchangeables disposent de gorges d'insertion destinées à recevoir des accumulateurs de froid (8)

13. Procédé de distribution de marchandises selon les revendications 1 à 12, **caractérisé en ce que** lesdites camionettes sont peu bruyantes, non polluantes, équipées en motorisation hybride et q'elles disposent des installations nécessaires pour les manoevrer de l'extérieur.

14. Procédé de distribution de marchandises selon les revendications 1, 6 à 10 et 13, **caractérisé en ce que** lesdites camionettes de livraison sont utilisées pour la livraison des produits non alimentaires ou comme véhicules d' atelier.

15. Procédé de distribution de marchandises selon la revendication 1, **caractérisé en ce que** lesdits conteneurs de dépôt dispose au moins d'un casier (13) pour recevoir au moins un desdits récipients à usage répété et qu'ils sont equipés des cadres ou des huisseries (10, 11) permettant leur installation - seul ou groupé avec d'autres - dans des murs, des pans de mur, des colonnes, ou qu'ils permettent l'empilage ou la suspension libre et que lesdits cadres ou/et lesdites huisseries peuvent être complétés par d'autres cadres ou par d'autres huisseries de sorte qu'un tel nombre de récipients à usage répété peut être déposé qui correspond aux besoins du client.

16. Procédé de distribution de marchandises selon les revendications 1 et 15, **caractérisé en ce que** chaqun des casiers desdits conteneurs de dépôt peut séparément être équipés en isolants afin de mettre à la disposition l'isolation thermique.

17. Procédé de distribution de marchandises selon la revendication 16, **caractérisé en ce que** les casiers équipés en isolants peuvent être réfrigérés soit par l'introduction des accumulateurs de froid, soit par le procédé d'évaporation fonctionnant à l'aide d'un petit groupe frigorifique installé à proximité dudit conteneur de dépôt ou bien installé à la place d'un desdits casiers.

18. Procédé de distribution de marchandises selon la revendication 17, **caractérisé en ce que** le groupe frigorifique se met en marche ou élargit la réfrigération à tel ou tel casier dès qu' il identifie l'introduction de marchandises réfrigérées.

19. Procédé de distribution de marchandises selon la revendication 18, **caractérisé en ce que** l'identification des marchandises réfrigérées se fait par le moyen d'une codification installée ou mise en position d'attente à l'extérieur dudit récipient à usage répété et par le moyen d'une sonde installée à l'interieur dudit conteneur de dépôt et que dès qu'un desdits récipients à usage répété codés est enlevé de son casier, le groupe frigorifique coupe la réfrigération de ce casier, ou en ce que, dès que tous lesdits récipients réfrigérés sont enlevés, le groupe frigorifique s'arrête et le codage est neutralisé.

20. Procédé de distribution de marchandises selon les revendications 1 et 15 à 19, **caractérisé en ce que** lesdits casiers des conteneurs de dépôt peuvent être chargés et vidés soit par l'avant soit par l'arrière.

21. Procédé de distribution de marchandises selon la revendication 20, **caractérisé en ce qu'**au cas où les deux côtés sont accessibles, au moins une ouverture dudit conteneur de dépôt (l'ouverture vers l'extérieur) est équipée d'une porte qui met à disposition une fermeture de sécurité.

22. Procédé de distribution de marchandises selon les revendications 1 et 15 à 21, **caractérisé en ce que** lesdits casiers sont conçus de façon à pouvoir recevoir lesdits récipients à usage répété vidés de leur contenu et que de ce fait, ils sont propres au retour desdits récipients à usage répété.
